# EUROPÄISCHE PATENTSCHRIFT

(11) **EP 0 649 759 B1**
(45) Veröffentlichungstag und Bekanntmachung des Hinweises auf die Patenterteilung: **30.10.1996**
(21) Anmeldenummer: 94106459.4
(22) Anmeldetag: 26.04.1994
(51) Int. Cl.: B43L 23/08, B22F 3/00, B43L 23/00

(54) **Spitzervorrichtung**
Sharpener
Taille-crayon

(30) Priorität: 21.10.1993 DE 9316065 U; 30.12.1993 DE 9320168 U
(43) Veröffentlichungstag der Anmeldung: 26.04.1995
(73) Patentinhaber: KUM GmbH & Co. KG Kunststoff- und Metallwarenfabrik, 91054 Erlangen (DE)
(72) Erfinder: Lüttgens, Fritz, Dr., D-91054 Erlangen (DE)
(74) Vertreter: Tergau, Enno, Dipl.-Ing.

(56) Entgegenhaltungen:
- DE-A- 3 527 988
- DE-B- 1 008 150
- DE-C- 968 707
- DE-U- 9 113 971
- FR-A- 978 671

## Beschreibung

Die Erfindung betrifft eine Spitzervorrichtung gemäß dem Oberbegriff des Anspruches 1.

Die aus der DE-B-1008150 bekannten

Spitzervorrichtungen werden zum Spitzen von Stiften, Kreiden u. ä. verwendet. Die Erfindung betrifft ganz allgemein einen Stiftspitzer, ohne daß eine Begrenzung für den Verwendungszweck der Stifte für die Ausgestaltung des Spitzers relevant wäre. Die Stifte können Bleistifte, Schreibstifte, Malstifte oder auch Kosmetikstifte oder Kreiden sein. Meist handelt es sich um holzgefaßte Stifte. Es ist aber auch denkbar, daß eine andere, schälbare Umhüllung für die jeweilige Stiftmine gewählt wird.

Konstruktiv enthalten Spitzervorrichtungen für Stifte, Kreiden u. ä. einen Spitzerkörper mit wenigstens einem Aufnahmeraum, der einen kreisförmigen Querschnitt hat und sich konisch verjüngend von einer Einführöffnung aus in den Spitzerkörper hinein erstreckt, und eine Ausgabeöffnung enthält, die sich zur Ableitung von Spitzabfall vom Aufnahmeraum durch den Spitzerkörper hindurch erstreckt, und eine bereichsweise die Ausgabeöffnung überdeckende Spitzerklinge, deren Schneidkante parallel zu einer Mantellinie der Mantelfläche des Aufnahmeraumes verläuft und die die Mantelfläche längs einer Mantellinie in der Ausgabeöffnung schneidet.

Herkömmliche Spitzer bestehen im wesentlichen aus bekannten Werkstoffen für das Spitzergehäuse, wie Leichtmetall, Kunststoff oder Holz, wobei der Gehäusewerkstoff dazu geeignet sein muß, den zu spitzenden Stift ausreichend zu führen und die Spitzerklinge, d. h. das Spitz-Messer nach Möglichkeit auswechselbar zu fixieren. Dabei wird wertvolles Rohmaterial verwendet.

Der Erfindung liegt die Aufgabe zugrunde, eine Spitzervorrichtung der eingangs genannten Art zu schaffen, die zu ihrer Herstellung natürliche Ressourcen schont und dadurch umweltfreundlich ist und die Probleme des Werkstoff-Recyclings zu lösen hilft.

Diese Aufgabe wird bei einer gattungsgemäßen Spitzervorrichtung durch das kennzeichnende Merkmal des Anspruchs 1 gelöst.

Dadurch, daß der Werkstoff für den Spitzerkörper, also für den Halter der Schälmesser und für die Führung des Stiftkonus beim Spitzvorgang aus zusammengepreßten Metallspäne oder geleerten, zusammengepreßten Metalldosen oder Teilen davon besteht, werden einerseits Rohstoffe und Energie gespart, die für die konventionelle Spitzerherstellung erforderlich wären, und andrerseits wird der Metallabfall und Blechabfall in Form der Dosen, deren umweltverträgliche Entsorgung ein besonderes Problem für die Industrie bedeutet, auf besonders einfache, kostengünstige und nutzbringende Weise wiederverwertet.

Bei den Metallspäne handelt es sich um Abfälle, die bei der Zerspanung metallischer Werkstoffe in einer beliebigen Fertigung anfallen, also ganz allgemein um Bearbeitungsrückstände.

Dabei ist es vorteilhaft, daß für die Wiederverwertung der Metallspäne und/oder der Abfalldosen keine Wiederaufbereitungsmaßnahmen für das Material beispielsweise durch Einschmelzen, Segregieren, Reinigen etc. erforderlich ist. Die hierfür normalerweise anfallenden Aufwendungen und die damit verbundene weitere Umweltbelastung entfallen. Weiterhin besteht ein Vorteil der Erfindung darin, daß keine aufwendigen thermischen Formverfahren, wie sie für Spitzer aus Metall oder Kunststoff üblich sind, oder Schneidverfahren, um Spitzer aus Holz oder Metall aus Rohlingen herzustellen, erforderlich sind. Vielmehr muß lediglich eine Preßform verwendet werden, die auf Grund des Metallspänematerials oder "Rohlings" Getränkedose nur einen geringen Verformungsdruck aufbringen muß, um den Spitzerkörper herzustellen. Sowohl Metallspäne als auch -dosen sind recht leicht zu verformen, da es sich um dünne bzw. dünnwandige Teile handelt, und können auch leicht in die gewünschten Formen gebracht werden.

Wegen der weitgehenden Vor- oder Verformung beim Preß- und Faltvorgang kann ein sehr hochwertiger und genau gearbeiteter Spitzerkörper hergestellt werden. Eben weil es sich um feine Metallteilchen oder dosenartige Ausgangskörper handelt, ist ein nur vergleichsweise geringer Verformungsdruck erforderlich, um auch kompliziertere Rohformen herzustellen. Die Fließfähigkeit bzw. die Duktilität von derart feinen Teilchen und dünnem Blech für den spanlosen Vor- oder Verformprozeß wird durch die dünne Teilchen- oder Blechkonsistenz wesentlich begünstigt.

Nach Anspruch 2 ist es bevorzugt, daß Getränkedosen den Rohstoff für das Spitzergehäuse bilden. Vorteilhaft ist es, wenn ein Stück Spitzergehäuse aus genau einer Getränkedose besteht. Dadurch ist es besonders einfach, zur Herstellung eines Spitzergehäuses oder -körpers die richtige Materialmenge zu verwenden. Dabei ist ferner von Vorteil, daß es sich bei dem Ausgangskörper bereits um einen einzelnen einheitlichen Körper handelt, so daß beim Preßvorgang kein Zusammenhalt von mehreren getrennten Teilen erreicht werden muß, so daß außerdem die Kohärenz des Spitzerkörpers wesentlich verbessert wird. Es handelt sich bei dem Ausgangsprodukt für den Recycling-Nutzvorgang um einen in sich einheitlichen Gegenstand, der keine Verschmelzung, Verbindung o. dgl. mit einem anderen Recycling-Körper erfordert. Hier können somit auch unterschiedliche Gehäuse voluminar durch die Verwendung unterschiedlicher Dosengrößen als Ausgangsprodukt hergestellt werden, ohne daß die Konsistenz des Ausgangsproduktes Probleme bereitet.

Übliche Getränkedosen sind nach dem Durchschnittsbedarf bei Durstgefühlen eines Menschen dimensioniert. Es handelt sich dabei weit überwiegend um 0,33-l-Dosen. Gerade diese Dosen verfügen nach einem Zusammenpressen über ein Volumen, wie es üblicherweise für einen Spitzer benötigt wird. Es ist daher bevorzugt, daß, wie im Anspruch 3 angegeben ist, der Spitzer aus einer Getränkedose besteht, die einen ursprünglichen Inhalt von 0,33 l hat.

Besonders vorteilhaft handelt es sich bei dem Material für den Spitzerkörper um Metallabfall oder Abfalldosen aus Weißblech und/oder Aluminiumblech, wie im Anspruch 4 angegeben ist, wobei einerseits diese Materialien bei Metallverarbeitungsprozessen häufig anfallen und andrerseits bei Getränkedosen allgemein üblich sind. Derartige Materialien oder Rohstoffe sind besonders leicht zu verarbeiten und die daraus entstandenen Spitzerkörper und deren Oberflächen sind sehr haltbar.

Gemäß Anspruch 5 enthält der Spitzerkörper bevorzugt wenigstens in Teilen seiner Außenflächen Falt- und/oder Preßhohlräume. Die Verwendung von Spitzern mit einem aus metallischem Blech oder Späneabfall in gepreßter, also stark komprimierter Form hergestellter Spitzerkörper, hat den Vorteil der Einschlüsse von Spalten, Zerklüftungen, also ganz allgemein von Falt- bzw. Preßhohlräumen. Diese geben jedem Spitzerkörper ein individuelles Äußeres und lassen besonders gut die Herkunft des Spitzerkörpers als Recyclingprodukt erkennen, so daß entsprechende Kundenwünsche gut sichtbar realisiert werden können.

Die entsprechend Anspruch 6 vorzugsweise mechanische Nach- oder Endbearbeitung, z. B. eine im Zerspanungswege erfolgte Endformung, des Spitzers schafft noch glattere Oberflächen, die dennoch die Unregelmäßigkeiten des Materials erkennen lassen. Je nach Art der angewandten Behandlung(en) können weitere Form- und Farbgestaltungen der Oberfläche entsprechend der anzusprechenden Käuferschicht erzielt werden, so daß vielfältige Absatzmöglichkeiten bestehen. Es wird hierbei somit nicht nur an glättende Nachbehandlungen gedacht, sondern auch an Formbildungen, die beim Preßverformen der Metallspäne oder Ausgangsdose nicht oder nur schwer erzeugt werden können.

Ein weiterer Vorteil der durch Preßverformung erzeugten Oberfläche des Spitzerkörpers mit Falt- und/oder Preßhohlräumen besteht in der Haftverbesserung für aufgetragene Schichten. Beispielsweise ist bei einer an die Formgebung des Spitzergehäuses anschließenden Farbgebung die durch die Falt- und/oder Preßhohlräume deutlich vergrößerte Oberfläche für die Einwirkung von Farbgebungsmaßnahmen, z. B. im Wege der Galvanik oder des Lackierens oder anderer Beschichtungstechniken, von Vorteil. Vor allen Dingen besteht auch die Möglichkeit, vor der Preßverformung der als Blech von geringer Wandstärke oder Metallspäne vorliegenden metallischen Komponenten Farbpigmente beizugeben, was besondere Farbwirkungen am Fertigprodukt zur Folge haben kann. Es kann der Spitzerkörper gewissermaßen von innen heraus gefärbt werden. So kann ferner z. B. eine vor dem Preßvorgang beigegebene Farbtönung am fertiggepreßten und bearbeiteten Gehäuse durch äußere Einwirkung von chemischen Flüssigkeiten oder anderen Bearbeitungen besondere Farbeffekte hervorbringen, die ihre Ursache in der Unregelmäßigkeit und Inhomogenität des Werkstoffgefüges des Spitzerkörpers haben. Die entsprechenden Ausgestaltungen des Spitzerkörpers bzw. dessen Oberfläche zumindest teilweise mit einer Beschichtung, mit einer galvanisierten oder lackierten Schicht, einer Behandlung mit chemischen Flüssigkeiten und/oder einer Beimengung von Farbpigmenten vor der Preßverformung sind jeweils in den Ansprüchen 7, 8, 10 und 11 angegeben.

Nach Anspruch 9 kann wenigstens die Außenfläche des Spitzerkörpers zumindest teilweise durch die unbehandelte Getränkedose oder Metallspäne gebildet sein. Einerseits kann damit eine reine Metalloberfläche erreicht werden, die die im Zusammenhang mit den Ansprüchen 5 bis 11 angegebenen Vorteile aufweist. Andrerseits verfügen Metallspäne und vor allem Getränkedosen in der Regel von Hause aus über eine hochwertige Oberflächeneinfärbung, die für die geschilderten Zwecke mit verwertbar ist. Dadurch ist es möglich, auch lackierte Metall- und -dosenabfälle vorteilhaft als Ganzes weiter zu verwenden, ohne die Lackschicht durch einen chemischen Trennvorgang ablösen zu müssen. Insgesamt ist diese Ausführungsform besonders günstig herzustellen.

Es gibt beispielsweise auf einem dem ganzen Schreibgebiet verwandten Gebiet die sogenannten "fancy products". Es sind dies eben modische gestaltete und in ihrer Oberflächenform gefärbte Gegenstände. Wenn der Werkstoff solcher Produkte ganz allgemein als "Faltwerkstoff, Preßwerkstoff" aus Blechdosenabfällen hergestellt wird, so ergibt sich ein Ausgangsprodukt, welches für eine besonders eigentümliche, anschließende Farbgebung eine besonders geeignete Grundlage bildet. Wenn hier von "geeignet" die Rede ist, so soll damit zum Ausdruck gebracht werden, daß hier ein Ausgangsprodukt geschaffen werden kann, welches ohne großen technischen Aufwand mit einer schillernden, changierenden oder anderen außergewöhnlichen Farbgebung bzw. mit einer Farbkomposition versehen werden kann, bei deren Herstellungsprozeß sich ggf. gerade die Recycling-Partikel, nämlich nicht abgelöste Lackfetzen o. dgl. erheblich auf die Oberflächen- oder Farbstruktur der Endfärbung auswirken können.

Für eine möglichst dauerhafte Verwendung der Spitzervorrichtung ist es nach Anspruch 12 vorteilhaft, wenn die Spitzerklinge auswechselbar an dem Spitzerkörper angebracht ist, was entsprechend Anspruch 13 bevorzugt durch Anschrauben oder Einstecken der Spitzerklinge an bzw. in den Spitzerkörper erfolgt. Dadurch kann die dem Verschleiß unterworfene Spitzerklinge ersetzt werden, wenn sie unbrauchbar geworden ist, ohne daß die gesamte Spitzervorrichtung weggeworfen oder entsorgt werden muß. Um von vorne herein die Verwendung der erfindungsgemäßen Spitzervorrichtung möglichst dauerhaft zu gestalten, ist zumindest eine Ersatzspitzerklinge lösbar an oder in dem Spitzerkörper angebracht, wobei für die mindestens eine Ersatzspitzerklinge an der äußeren Oberfläche des Spitzerkörpers eine Aufnahmeausnehmung vorgesehen ist, wie in den Ansprüchen 14 bzw. 15 angegeben ist, um u. a. Verletzungen durch die Schneide der Ersatzklingen auszuschließen.

Die Spitzervorrichtung ist besonders rationell und preisgünstig herzustellen, wenn gemäß Anspruch 16 die Spitzerklinge bei der Preßverformung der Metallspäne oder -dose in den Spitzerkörper eingepreßt ist. Zur Befestigung der Spitzerklinge wird diese vor der Formgebung des Spitzerkörpers in die Presse eingelegt und durch das anschließende Preßformen in den Spitzerkörper eingepreßt, so daß die Spitzerklinge ohne weitere Befestigungsmittel darin ausreichend fest gehalten wird. Zusätzliche Arbeitsvorgänge und Material zur Befestigung der Spitzerklinge sind dadurch nicht nötig. Nach Anspruch 17 ist sogar eine Spitzervorrichtung möglich, deren die Spitzerklinge integral mit dem Spitzerkörper aus der Metallspäne oder -dose gebildet ist, so daß eine gesonderte Spitzerklinge und deren Anbringung am Spitzerkörper gänzlich entfallen. Zwar wird zum Spitzen z. B. von Bleistiften üblicherweise eine Spitzerklinge aus härterem Material, wie beispielsweise Stahl verwendet. Da aber besonders diese Ausführungsform der erfindungsgemäßen Spitzervorrichtung extrem rationell hergestellt und daher auch billig verkauft werden kann, spielt deren Lebensdauer keine so große Rolle, und die gesamte Spitzervorrichtung kann problemlos als Metallabfall wiederverwertet werden. Überdies ist die Spitzervorrichtung auch für Kreiden und Fettstifte etc. geeignet, für die keine extra harte Spitzerklinge erforderlich ist, so daß sogar die integral mir dem Spitzerkörper ausgebildete Spitzerklinge eine ausreichend lange Lebens- und Funktionsdauer hat. Ggf. kann die Klinge zur Schärfung nachbearbeitet werden.

Eine Zentralöffnung, die sich vom Bereich der Konusspitze des Aufnahmeraumes vorzugsweise zumindest im wesentlichen längs der Achse des letzeren durch den Spitzerkörper hindurch erstreckt (Anspruch 18), sorgt für optimale Spitzergebnisse, da dadurch für die gespitzte Spitze des Stiftes oder der Kreide usw. über die Konusspitze des Aufnahmeraumes hinaus genügend Platz ist, daß die Spitze beim Spitzvorgang nicht selbst wieder beschädigt wird. Die Zentralöffnung kann auch als sacklochartige Erweiterung der Konusspitze ausgebildet sein. Der Durchmesser der Zentralöffnung ist entsprechend dem Durchmesser von Stiftminen oder Kreidespitzen ausgelegt.

Nach Anspruch 19 kann der Aufnahmeraum eine durch eine Nachbehandlung wenigstens im wesentlichen unzerklüftete glatte Wandfläche aufweisen und vorzugsweise durch eine Nachbehandlung eines preßgeformten Spitzerkörperrohlings gebildet werden. Dadurch wird ein in Aussehen und Wirkung den Aufnahmeräumen herkömmlicher Spitzervorrichtungen vergleichbarer Aufnahmeraum geschaffen. Die unzerklüftete Wandfläche des Aufnahmeraumes kann allgemein durch eine Nachbehandlung erreicht werden. Wird der Aufnahmeraum direkt bei der Preßformung des Spitzerkörpers mit gebildet, so kann seine Oberfläche zerklüftet sein. Durch Nachbohren, Fräsen oder ähnliches kann diese Oberfläche geglättet werden, um Kratzspuren an der gebildeten Spitze z. B. einer Kreide durch die ursprünglichen Zerklüftungen zu vermeiden. Der Aufnahmeraum kann aber auch gänzlich durch Bohren o. ä. in einen unvorbereiteten Spitzerkörper eingebracht werden.

Besonders bevorzugt ist jedoch, wenn der Aufnahmeraum eine bei der Preßformung der Metallspäne oder Dose erzeugte Mantelfläche mit Falt- und/oder Preßhohlräumen aufweist, wie im Anspruch 20 angegeben ist. Gerade im Bereich der Führung des Stiftkonus, wo beim Spitzvorgang der Minenstaub anfällt, wird letzterer sich insbesondere in diesen Zerklüftungen festsetzen und dort in besonders vorteilhafter Weise als Schmiermittel zur Reduzierung der Reibkräfte zwischen Stiftkonus und Gehäuse beitragen. Schließlich ist der Minenstaub bei Bleistiften stark graphithaltig. Bekanntlich ist Graphit ein den Reibungskoeffizienten einer Gleitfläche reduzierendes Medium. Bei Farb- oder Kosmetikstiften weist die Stiftmine oder Kreide meist einen hohen Fettgehalt auf, der sich in gleicher Weise den Reibungskoeffizienten reduzierend auswirkt. Ein weiterer Vorteil besteht in der Haftverbesserung bei einer an die Formgebung des Spitzergehäuses anschließenden Farbgebung oder anderweitige Beschichtung. Die damit verbundenen vorteilhaften Maßnahmen und Wirkungen wurden bereits vorstehend im Zusammenhang mit den Ansprüchen 7, 8, 10 und 11 beschrieben.

Eine Spitzervorrichtung nach Anspruch 21 ist besonders vorteilhaft, da für Stifte oder Kreiden unterschiedlicher Durchmesser insbesondere zwei unterschiedlich dimensionierte Aufnahmeräume vorgesehen sind. Es wurde gefunden, daß eine 0,33-l-Dose nach einem Zusammenpressen über ein Volumen verfügt, wie es für einen hier beanspruchten, sogenannten Doppelspitzer benötigt wird, so daß der gesamte Herstellungsprozeß äußerst rationell ist.

Die erfindungsgemäße Spitzervorrichtung kann auch in doppeltem Sinn als sogenannter Dosenspitzer ausgebildet sein, indem die Spitzervorrichtung einen Abfallbehälter enthält, innerhalb dem der Spitzerkörper mit von außen zugänglichem Aufnahmeraum angeordnet ist, so daß beim Spitzen Spitzabfälle ins Innere des Abfallbehälters fallen. Eine derartige Spitzervorrichtung ist vor allem für Unterwegs, in der Schule, etc. geeignet. Diese Ausbildung nach Anspruch 22 wird gemäß Anspruch 23 vorteilhaft weitergebildet, wenn der Abfallbehälter dosenförmig ist und insbesondere einen Schraub- oder Schnappdeckel aufweist, und daß vorzugsweise der Spitzerkörper an der Innenseite des Deckels so angeordnet ist, daß die Einführöffnung des Aufnahmeraumes mit einer Durchstecköffnung im Deckel ausgerichtet ist. Es können somit sämtlichen bekannten Abfallbehälter aus Kunststoff, Metall, Holz oder Verbundwerkstoffen verwendet werden. Da der Spitzerkörper bei dieser Ausführung üblicherweise nicht sichtbar ist, können hierfür weniger gelungene aber einwandfrei funktionierende Spitzerkörper verwendet werden, so daß damit Produktionsausschuß in vorteilhafter Weise reduziert wird. Im Sinne der Zweideutigkeit der erfindungsgemäßen Spitzervorrichtung als "Dosenspitzer", nämlich mit aus einer Dose bestehenden Spitzerkörper in einer Dose, kann als Abfallbehälter insbesondere eine ggf. umgearbeitete echte Getränkedose oder eine in geeignetem Maßstab verkleinerte nachgebildete Getränkedose vorgesehen werden.

Die Spitzervorrichtung ist besonders sicher zu bedienen, wenn nach Anspruch 24 der Spitzerkörper auf seiner äußeren Oberfläche zumindest Griffbereiche mit bei der Preßverformung erzeugter grober Struktur enthält, die gemäß Anspruch 25 bevorzugt zumindest im wesentlichen aus bei der Preßverformung erzeugten Rillen bestehen.

Auf Grund der weitgehenden Vor- oder Verformung beim Preß- und Faltvorgang und weil es sich eben um einen dosenartigen Ausgangskörper oder Metallspäne handelt, ist ein nur vergleichsweise geringer Verformungsdruck erforderlich, so daß problemlos auch kompliziertere Grundformen für den Spitzerkörper herzustellen sind. Die Fließfähigkeit bzw. die Duktilität von derart dünnem Blech oder entsprechender Metallspäne für den spanlosen Vor- oder Verformprozeß wird durch die dünne Blech- oder Materialkonsistenz dabei wesentlich begünstigt, so daß nach Anspruch 26 vorgesehen ist, daß der Spitzerkörper eine quader- oder zylinderförmige oder pyramiden-, obelisk-, keil- oder kegelförmige oder -stumpfförmige Grundform hat. Üblicherweise haben sämtliche bekannten Spitzerkörper die Grundform eines Keilstumpfes oder Quaders. Die zu ihrer Erzeugung verwendeten Maschinen auf andere Grundformen umzustellen ist zwar möglich, jedoch mit einem großen Aufwand verbunden. Gerade die Herstellung des Spitzerkörpers der erfindungsgemäßen Spitzervorrichtung ermöglicht aber eine einfach Einflußnahme auf die Form des Spitzerkörpers. Beispielsweise können bereits durch geeignete Steuerung der Herstellungs-Preßmaschine und/oder Einsätze für das Preßformwerkzeug unterschiedliche Grundformen erzeugt werden.

Nach Anspruch 27 kann der Aufnahmeraum beim Pressen des Spitzerkörpers mit eingeformt sein. Dies ist nach Anspruch 28 auch für Messerbetten für die Spitzerklinge und/oder ggf. die Ersatzklinge vorgesehen. Dadurch ist eine rationellere Verarbeitung und eine bessere Materialausnutzung möglich.

Bevorzugt sind nach Anspruch 29 die physikalischen Größen des Spitzerkörpers nach den Vorgaben einer Dose, insbesondere Getränkedose festgelegt. D. h., daß insbesondere das Endvolumen des Spitzerkörpers oder -gehäuses dem Ausgangsvolumen einer Metalldose angepaßt wird, damit mit einer einzigen Dose immer ein kompletter Spitzerkörper herstellbar ist. Mit anderen Worten: Wenn beispielsweise die Volumenentsprechung zwischen Ausgangsdose und Körper- oder Gehäuseform nicht "stimmen" sollte, so kann die Anpassung durch entsprechende Formmaßnahmen am Körper vorgenommen werden, wie z. B. durch Vorsehen weiterer Ausnehmungen am Spitzerkörper, quasi also durch ein Auskernen zur Volumenanpassung. Im einzelnen bedeutet dies, daß der Spitzerkörper so konstruiert und durch geeignete verdrängende Einsätze in der Preßform hergestellt wird, daß das verbleibende Volumen stets einer vorzugsweisen Getränkedose angepaßt ist und entspricht.

Als weitere vorteilhafte Ausführung ist gemäß Anspruch 30 vorgesehen, daß der Spitzerkörper ein Teil eines Satzes von zwei oder mehreren beim Preßformen integral ausgebildeten Spitzerkörpern ist und beim Preßformen oder anschließend abtrennbar ist. Dabei besteht der Satz von Spitzerkörpern vorzugsweise aus einer einzelnen Dose und insbesondere aus einer Getränkedose. Es können somit bei einem Preßvorgang mehrere Spitzergehäuse geformt werden, was beispielsweise aus einer einzigen Dose erfolgen kann, und die einzelnen Spitzergehäuse müssen dann lediglich durch Abschneiden, Abquetschen oder Abscheren getrennt werden. Dieser Trennvorgang kann z. B. unmittelbar beim Pressen oder am Ende davon erfolgen. Es ist auch möglich die Spitzerkörper in einem gesonderten Arbeitsvorgang voneinander zu trennen. Durch den beieinanderbelassenen Satz von Spitzerghäusen wird beispielsweise deren Weiterverarbeitung zu Spitzervorrichtungen erleichtert, da z. B. der gesamte Satz in einem Arbeitsvorgang mit Klingen versehen werden kann. Werden beim Formpressen geeignete Dünnstellen zwischen den einzelnen Spitzerkörpern ausgebildet, so können letztere im Satz bleiben und ggf. zu fertigen Spitzervorrichtungen komplettiert werden, bis diese im Einzelhandel oder beim Endverbraucher sind, wo der Satz von Spitzern dann aufgeteilt werden kann. Dies hat Vorteile beim Transport und bei der Lagerung.

Weitere vorteilhafte Ausgestaltungen ergeben sich aus den Unteransprüchen.

Nachfolgend wird die Erfindung anhand der Zeichnung näher erläutert. In dieser zeigen:
Fig. 1 eine Draufsicht auf eine erste Ausführungsform der Spitzervorrichtung,
Fig. 2 eine Frontansicht der ersten Ausführungsform aus Fig. 1,
Fig. 3 eine Getränkedose in bereits etwas zusammengepreßter Form,
Fig. 4 eine Draufsicht auf eine zweite Ausführungsform der Spitzervorrichtung,
Fig. 5 eine erste Seitenansicht der zweiten Ausführungsform aus Fig. 4,
Fig. 6 eine zweite Seitenansicht der zweiten Ausführungsform aus Fig. 4,
Fig. 7 eine Frontansicht der zweiten Ausführungsform aus Fig. 4,
Fig. 8 eine Rückansicht der zweiten Ausführungsform aus Fig. 4,
Fig. 9 eine Seitenansicht einer dritten Ausführungsform der Spitzervorrichtung, und
Fig. 10 eine Draufsicht auf die dritte Ausführungsform aus Fig. 9.

In den Figuren der Zeichnung sind gleiche Teile durchgehend mit denselben Bezugszeichen benannt.

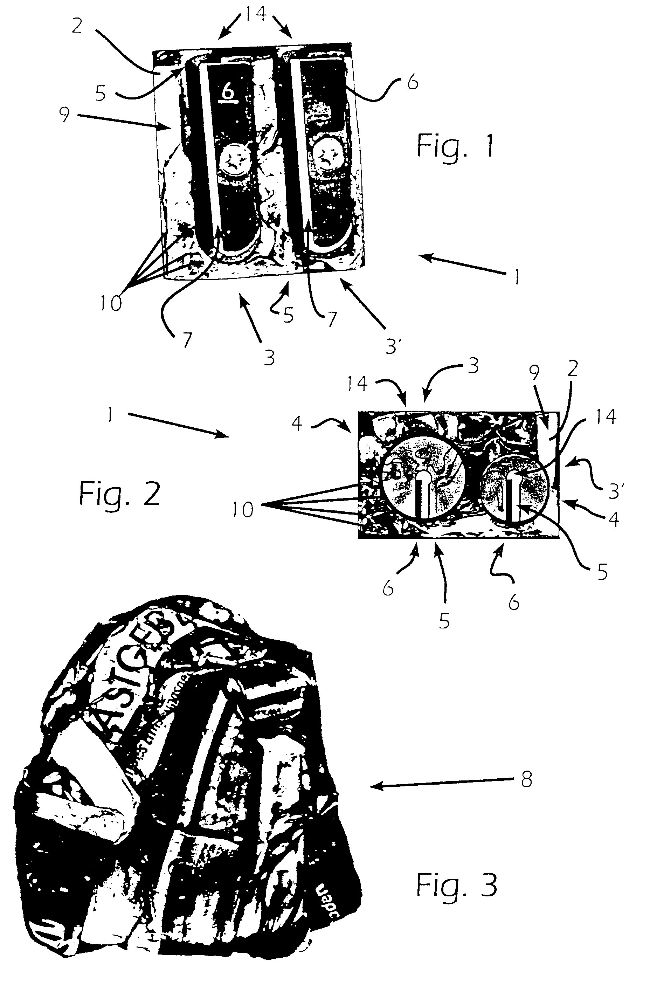

Fig. 1 zeigt eine Spitzervorrichtung 1, die einen Spitzerkörper 2 und zwei Spitzerklingen 6 enthält. Der Spitzerkörper 2 wurde durch Zusammenpressen einer Getränkedose in die entsprechende Form hergestellt. Dies ist möglich, da es sich bei der Getränkedose um eine 0,33-l-Dose handelt, deren Material, im vorliegenden Fall Weißblech, genau für einen Spitzerkörper 2 ausreicht. Grundsätzlich kann der Spitzerkörper 2 aber auch aus Metallspäne bestehen, die ebenfalls ausreichend dünn für eine Preßformung sind.

Der gezeigte und aus der einen Dose hergestellte Spitzerkörper 2 ist Grundlage zum Zusammenbau eines Doppelspitzers, d. h. einer Spitzervorrichtung, mit der Stifte, Kreiden u. ä. mit unterschiedlichen Durchmessern gespitzt werden können. Wie anhand der Frontansicht der Spitzervorrichtung 1 in Fig. 2 deutlich wird, sind daher zwei Aufnahmeräume 3 und 3' mit unterschiedlichen Durchmessern in dem Spitzerkörper 2 ausgebildet, was direkt beim Preßverformen der Ausgangsdose mittels zweier entsprechenden Dorne geschehen kann. Ein zu spitzender Gegenstand kann dadurch durch eine Einführöffnung 4 eines passenden Aufnahmeraumes 3 oder 3' eingeführt werden. Die Grundform des Spitzerkörpers 2 dieser Spitzervorrichtung 1 ist ein Keilstumpf.

Damit eine entsprechende Spitzenform bei dem zu spitzenden Gegenstand erzielt werden kann, haben die Aufnahmeräume 3 und 3' einen kreisförmigen Querschnitt und erstrecken sich konisch verjüngend von der jeweiligen Einführöffnung 4 aus in den Spitzerkörper 2 hinein. Die konische Wandfläche jedes Aufnahmeraumes 3, 3' weist eine im wesentlichen längs einer Mantellinie verlaufende Ausgabeöffnung 5 zur Ableitung von Spitzabfall vom Aufnahmeraum 3, 3' durch den Spitzerkörper 2 hindurch auf. Auch die beiden Ausgabeöffnungen 5 wurden direkt beim Preßformgebung des Spitzerkörpers 2 mit ausgebildet, indem entsprechende Preßwerkzeuge eingesetzt wurden.

Schließlich ist für jeden Aufnahmeraum 3, 3' eine Spitzerklinge 6 vorgesehen, die bereichsweise die Ausgabeöffnung 5 überdeckt und deren Schneidkante 7 im wesentlichen parallel zu einer Mantellinie der Mantelfläche des Aufnahmeraumes 3, 3' verläuft. Damit die Spitzerklingen 6 an einen in den Aufnahmeraum 3 oder 3' eingeführten und dann gedrehten zu spitzenden Gegenstand angreifen können, schneiden sie die Mantelfläche der Ausgabeöffnung längs einer Mantellinie.

In den beiden Ansichten der Figuren 1 und 2 ist zu erkennen, daß der Spitzerkörper 2 wenigstens in Teilen seiner Außenflächen 9 Falt- und/oder Preßhohlräume 10 enthält, da der Spitzerkörper 2 aus einer unbehandelten Getränkedose gebildet wurde.

Die beiden Spitzerklingen 6 sind auswechselbar an dem Spitzerkörper 2 angeschraubt. Wird also eine der Klingen stumpf, so kann sie problemlos gegen eine neue ausgetauscht werden.

Am bezüglich der Einführöffnungen 4 gegenüberliegenden Ende der Aufnahmeräume 3 und 3' sind je eine Zentralöffnung 14 vorgesehen, die sich vom Bereich der Konusspitze des Aufnahmeraumes 3, 3' vorzugsweise zumindest im wesentlichen längs der Achse des letzeren durch den Spitzerkörper 2 hindurch erstreckt. Dadurch wird sichergestellt, daß die beim Spitzen erzeugte Spitze nicht durch den Spitzvorgang selbst wieder abgebrochen oder zerdrückt wird.

Der Aufnahmeraum 3, 3' weist eine bei der Preßverformung der Getränkedose erzeugte Mantelfläche mit Falt- und/oder Preßhohlräumen 10 auf. Darin setzt sich im Gebrauch Abrieb von Graphit oder Fett ab, so daß hier im Bereich der Führung des Stift- oder Kreidekonus derartige Schmiermittel zur Reduzierung der Reibkräfte zwischen Stift- oder Kreidekonus ausreichend vorhanden sind.

Im übrigen sind die reinen funktionellen Merkmale üblicher Spitzervorrichtungen auch bei der gezeigten Ausführungsform realisiert.

Fig. 3 zeigt eine Getränkedose 8, nachdem sie zum platzsparenderen Transport bereits etwas zusammengedrückt wurde. In dieser Form, aber auch in ihrer nahezu oder ganz unverformten Ausgangsform, kann die Getränkedose 8 in eine Presse gegeben werden, um den Spitzerkörper 2 herzustellen. Dabei ist für die Ausführung nach den Figuren 1 und 2 kein kompliziertes Abmessen der Ausgangsmaterialmenge für die Herstellung des Spitzerkörpers 2 erforderlich, da einfach ein Stück Dose 8 zur Erzeugung von einem Spitzerkörper 2 verwendet wird. Somit kann in ganz einfacher Weise die entsprechende Presse automatisiert beschickt werden. Zur Herstellung der Ausführungsform der Spitzervorrichtung nach den Figuren 1 und 2 ist es auch nicht erforderlich, das Ausgangsmaterial Getränkedose in irgend einer Art vorzubehandeln, sondern sie Getränkedose 8 kann so, wie sie entsorgt wurde in den Spitzerkörper 2 umgeformt werden. Daher zeigt die Außenfläche 9 (Figuren 1 und 2) auch eine entsprechende Farbgestaltung, die von der Ausgangsdose und deren zufälliger Faltverformung abhängt. Bei Verwendung von Metallspäne können gleiche oder ähnliche Effekte erzielt werden.

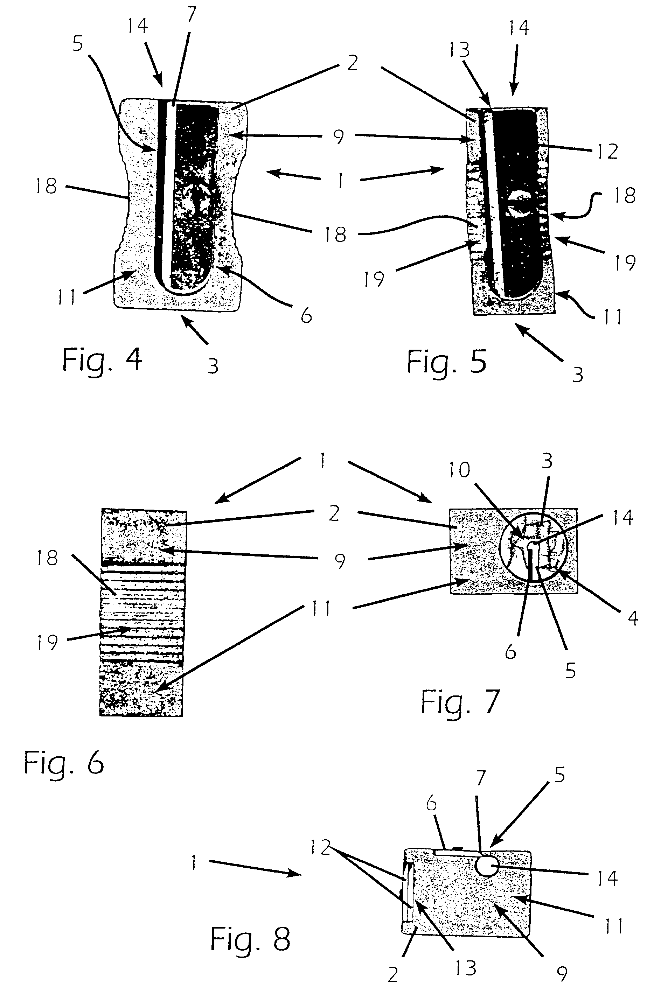

Die Figuren 4 bis 8 zeigen eine zweite Ausführungsform einer Spitzervorrichtung 1. Auch diese Spitzervorrichtung 1 ist zum Spitzen von Stiften, Kreiden u. ä. geeignet. Der Spitzerkörper 2 besteht aus einer Aluminiumgetränkedose und enthält, wie insbesondere die Fig. 7 erkennen läßt, im Unterschied zur vorbeschriebenen Ausführung jedoch nur einen Aufnahmeraum 3, der einen kreisförmigen Querschnitt hat und sich konisch verjüngend von seiner Einführöffnung 4 aus in den Spitzerkörper 2 hinein erstreckt, und eine Ausgabeöffnung 5, die sich zur Ableitung von Spitzabfall vom Aufnahmeraum 3 durch den Spitzerkörper 2 hindurch erstreckt. Ferner ist eine bereichsweise die Ausgabeöffnung 5 überdeckende Spitzerklinge 6 vorgesehen, die zur Gewährleistung ihrer Funktion so angeordnet ist, daß ihre Schneidkante 7 parallel zu einer Mantellinie der Mantelfläche des Aufnahmeraumes 3 verläuft und die Mantelfläche längs einer Mantellinie in der Ausgabeöffnung 5 schneidet.

Der Spitzerkörper 2 besteht aus einer geleerten, zusammengepreßten 0,33-l-Getränkedose und wurde nach dem Formpreßvorgang in einen Rohling (nicht dargestellt) mechanisch nachbearbeitet. Dabei wurden zum einen Aufnahmeraum 3 mit Einführöffnung 4, evtl. im gleichen Arbeitsgang die Zentralöffnung 14 und die Ausgabeöffnung in den Rohling eingebracht. Anschließend wurde die Oberfläche nach genauen Maßen gefräßt oder geschnitten, dann galvanisiert und schließlich poliert. Dadurch wird ein besonders hochwertig aussehender Spitzer geschaffen. Wenn z. B. die Wandung des Aufnahmeraumes 3 nicht galvanisiert, sondern aus den bereits oben beschriebenen Schmierungsgründen Falt- und/oder Preßhohlräume 10 enthalten soll, kann das Herstellen des Aufnahmeraumes 3 beispielsweise nach dem Galvanisieren durch Bohren erfolgen. Auf Grund der inneren Inhomogenität des Spitzerkörpers 2 wird dabei keine völlig glatte Wandung des Aufnahmeraumes 3 erzielt, was aber bei entsprechender Behandlung auch möglich wäre.

Bei der mechanischen Nachbearbeitung des Rohlings wurden auch zwei Griffbereiche 18 mit Rillen 19 erzeugt, die die Figuren 5 und 6 besonders gut zeigen. Wie die Fig. 4 zeigt, werden die Griffbereiche 18 durch an Fingerkuppen zum Halten der Spitzervorrichtung 1 angepaßte Ausrundungen gebildet, die durch die Rillen 19 besonders griffig sind.

Weiterhin weist der Spitzerkörper 2 eine Aufnahmeausnehmung 13 zum Aufnehmen von zwei Ersatzspitzerklingen 12 auf, wie aus Fig. 8 deutlich wird. Da sowohl die Spitzerklinge 6 als auch die Ersatzspitzerklingen 12 an dem Spitzerkörper angeschraubt sind, können sie leicht gegeneinander ausgewechselt werden. Hier sei noch darauf hingewiesen, daß für die Verschraubung geeignete Gewindelöcher ggf. im Zuge der Herstellung des Spitzerkörpers 2 in diesen eingeschnitten werden können. Abhängig vom Material der Ausgangsdosen und der Art der verwendeten Schrauben könnten letztere aber auch ihr Gewindeloch beim erstmaligen Einschrauben selbst schneiden.

Im wesentlichen ist die Grundform des Spitzerkörpers 2 dieser Spitzervorrichtung 1 ein Quader, wobei diese Form durch die in der Aufnahmeausnehmung 13 versenkt angebrachten Ersatzspitzerklingen 12 nicht gestört ist, die dadurch mit ihren Schneiden auch keine Beschädigungen oder Verletzungen anrichten können.

Auch diese Spitzervorrichtung 1 entspricht im übrigen funktionell und technisch üblichen herkömmlichen Spitzervorrichtungen.

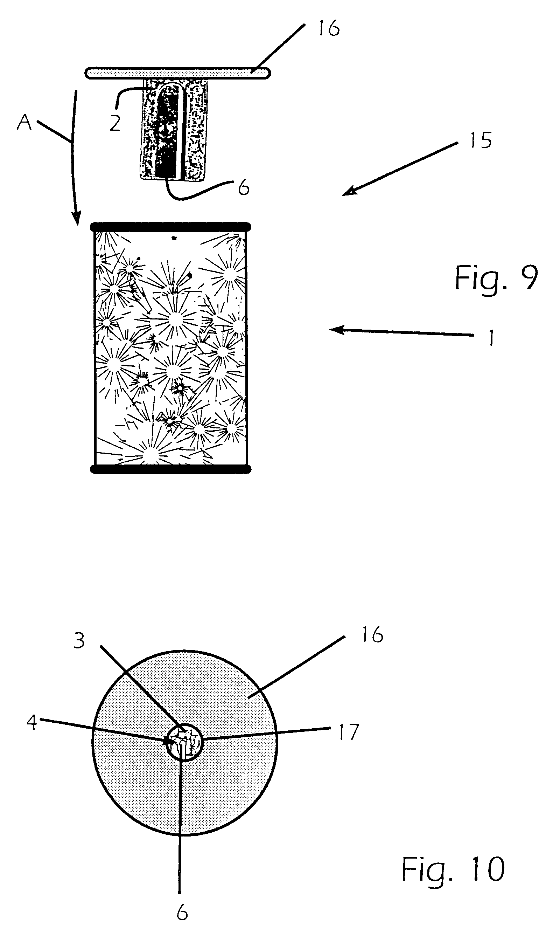

In den Figuren 9 und 10 ist eine dritte Ausführungsform der Spitzervorrichtung 1 gezeigt. Bis auf die Griffbereiche und die Ersatzspitzerklingen ist der hier gezeigte Spitzerkörper 2 genauso aufgebaut, wie der der vorhergehend beschriebenen zweiten Ausführung. Lediglich auf die Galvanisierung der Oberfläche des Spitzerkörpers 2 wurde verzichtet, da dieser üblicherweise ohnehin nicht sichtbar ist, Außerdem weist dieser Spitzerkörper 2 eine keilstumpfförmige Grundform auf, so daß aus einer Getränkedose zwei Spitzerkörper 2 durch Pressung geformt und anschließend durch Schneiden getrennt werden.

Die Spitzervorrichtung 1 dieser Ausführung enthält einen Abfallbehälter 15, innerhalb dem der Spitzerkörper 2 mit von außen zugänglichem Aufnahmeraum 3 angeordnet ist. Der Abfallbehälter 15 ist eine Metalldose mit einem Schnappdeckel 16 aus Kunststoff, an dessen Innenseite der Spitzerkörper 2 so angeordnet ist, daß die Einführöffnung 4 des Aufnahmeraumes 3 mit einer Durchstecköffnung 17 im Deckel 16 ausgerichtet ist, wie deutlich anhand Fig. 10 zu erkennen ist. Der Deckel 16 ist ausreichend elastisch verformbar, so daß er in Richtung des Pfeiles A auf die offene Seite des Abfallbehälters 15 aufgeschnappt werden kann.

Der Abfallbehälter 15 könnte auch aus jeglichem anderen Material sein, wie z. B. Kunststoff oder Holz. Der Deckel 16 kann entsprechend der Verschlußart auch als Schraubdeckel oder Klappverschluß ausgeführt sein und ebenfalls aus anderen Materialien bestehen. Auch andere als runde Querschnitte sind möglich.

Die Spitzervorrichtung 1 enthält ferner einen Aufnahmeraum 3, der beim Pressen des Spitzerkörpers 2 mit eingeformt wurde. Außerdem ist ein Messerbett (nicht dargestellt für die Spitzerklinge 6 vorgesehen, das ebenfalls beim Pressen des Spitzerkörpers mit eingeformt wurde. Falls die Spitzervorrichtung 1 auch mit einer oder mehreren Ersatzklinge(n) ausgestattet ist, kann auch für diese(s) ein entsprechendes Messerbett beim Preßformen des Spitzerkörpers geschaffen werden. Durch diese Ausgestaltungen ist eine rationellere Verarbeitung und eine bessere Materialausnutzung möglich.

Die physikalischen Größen, wie Volumen, Abmessungen, Form und Masse, des Spitzerkörpers 2 sind nach den Vorgaben einer Getränkedose 8 festgelegt. Die Volumenentsprechung des Spitzerkörpers 2 zur Getränkedose 8 wird dabei dadurch erreicht, daß im Spitzerkörper 2 zusätzliche Ausnehmungen vorgesehen und eingebracht sind, was direkt bei der Preßformung geschieht, wenn die Gesamtabmessungen des Spitzerkörpers 2 ansonsten nicht mit dem Materialvolumen einer Getränkedose 8 erreicht werden könnten. Die entsprechenden Ausnehmungen oder geeigneten Formgebungen können zu schmückenden Ausgestaltungen führen und evtl. sogar mit Farbgebungen gefüllt oder herausgehoben werden. Im Falle des Dosenspitzers von Fig. 9 und 10 können aber entsprechende Ausnehmungen auch benachbart der Einführöffnung 4 im Spitzerkörper 2 angeordnet sein, was nach Montage des letzteren im Schraub-oder Schnappdeckel 16 nicht mehr sichtbar ist.

Statt des 1-zu-1-Verhältnisses können aber auch mehrere Spitzerkörper 2 in einem integralen Satz hergestellt sein, der dann vor der Trennung der einzelnen Spitzerkörper 2 in einem einzigen Arbeitsgang komplett mit Spitzerklingen 6 versehen werden kann. Dies ist besonders rationell und zusätzlich wird dadurch das Handhaben der Sätze von Spitzerkörpern 2 gegenüber dem einzelner Spitzerkörper 2 erleichtert. Die dann erhaltenen Sätze von Spitzervorrichtungen 1 können entweder gleich separiert werden, was durch Abschneiden, Abquetschen oder Abscheren geschehen kann, oder zusammen belassen verpackt und ausgeliefert werden, wenn ein Trennen später ohne weiteres möglich ist, wie z. B. durch geeignete Dünnstellen zwischen den einzelnen Spitzerkörpern 2. Die Spitzerkörper 2 eines Satzes können jedoch auch beim oder am Ende des Formpreßvorgang(es) abgeschnitten, abgequetscht oder abgeschert oder anderweitig getrennt werden.

Zwar bestehen alle in den Figuren gezeigten Ausführungsformen des Spitzerkörpers aus Dosen oder Dosenmaterial, jedoch können Spitzerkörper auch aus Metallspäne gefertigt sein. Dabei lassen sich die gleichen oder ähnliche Vorteile wie im Zusammenhang mit dem Rohstoff Altdosen beschrieben erreichen. Beispielsweise ist die Mengenbemessung bei Metallspäne für einen Spitzerkörper nach Masse und/oder Volumen ebenfalls sehr einfach unf genau. Die Metallspäne können beispielsweise aus Leichtmetall bestehen, aber auch eine Beimischung härterer Materialien enthalten. Da die dünnen und kleinen Späneteilchen gut zusammenpreßbar sind, können evtl. auch ausschließlich härtere Materialien verwendet werden, wobei eine ausreichende Verbindung der Teilchen nach dem Preßformen erreicht werden muß, was durch entsprechende Form der Späneteilchen oder aber auch durch Beimengungen von Haftmitteln verbessert werden kann.

Zusätzlich zu den vorstehend beschriebenen Ausführungsbeispielen der Spitzervorrichtung sind auch alle weiteren, durch die Ansprüche eröffneten Ausgestaltungen mit den entsprechenden eingangs erläuterten Vorzügen im Umfang der Erfindung möglich.

## Patentansprüche

1. Spitzervorrichtung für Stifte, Kreiden u. ä.
- mit einem Spitzerkörper, der wenigstens einen Aufnahmeraum, der einen kreisförmigen Querschnitt hat und sich konisch verjüngend von einer Einführöffnung aus in den Spitzerkörper hinein erstreckt, und eine Ausgabeöffnung enthält, die sich zur Ableitung von Spitzabfall vom Aufnahmeraum durch den Spitzerkörper hindurch erstreckt, und
- mit einer bereichsweise die Ausgabeöffnung überdeckenden Spitzerklinge, deren Schneidkante parallel zu einer Mantellinie der Mantelfläche des Aufnahmeraumes verläuft und die Mantelfläche längs einer Mantellinie in der Ausgabeöffnung schneidet,
dadurch gekennzeichnet,
daß der Spitzerkörper (2) aus zusammengepreßten Metallspäne oder geleerten, zusammengepreßten Metalldosen oder Teilen davon besteht.

2. Spitzervorrichtung nach Anspruch 1,
dadurch gekennzeichnet,
daß der Spitzerkörper (2) aus geleerten, zusammengepreßten Getränkedosen (8), insbesondere einer Getränkedose (8) besteht.

3. Spitzervorrichtung nach Anspruch 2,
dadurch gekennzeichnet,
daß der Spitzerkörper (2) aus einer geleerten, zusammengepreßten 0,33-l-Getränkedose (8) besteht.

4. Spitzervorrichtung nach einem der vorhergehenden Ansprüche,
dadurch gekennzeichnet
daß der Spitzerkörper (2) aus einer Getränkedose (8) aus Leichtmetall, insbesondere Weißblech oder Aluminiumblech besteht.

5. Spitzervorrichtung nach einem der vorhergehenden Ansprüche,
dadurch gekennzeichnet,
daß der Spitzerkörper (2) wenigstens in Teilen seiner Außenflächen (9) Falt-und/oder Preßhohlräume (10) enthält.

6. Spitzervorrichtung nach einem der vorhergehenden Ansprüche,
dadurch gekennzeichnet,
daß die Außenflächen (9) des Spitzerkörpers (2) wenigstens bereichsweise mechanisch nachgearbeitet, insbesondere glattgefräst und/oder -poliert sind.

7. Spitzervorrichtung nach einem der vorhergehenden Ansprüche,
dadurch gekennzeichnet,
daß wenigstens die Außenfläche (9) des Spitzerkörpers (2) zumindest teilweise eine Beschichtung (11) aufweist.

8. Spitzervorrichtung nach einem der vorhergehenden Ansprüche,
dadurch gekennzeichnet,
daß wenigstens die Außenfläche (9) des Spitzerkörpers (2) zumindest teilweise galvanisiert oder lackiert ist.

9. Spitzervorrichtung nach einem der vorhergehenden Ansprüche,
dadurch gekennzeichnet,
daß die Außenfläche (9) des Spitzerkörpers (2) zumindest teilweise durch die unbehandelte Metallspäne oder Dose gebildet ist.

10. Spitzervorrichtung nach einem der vorhergehenden Ansprüche,
dadurch gekennzeichnet,
daß wenigstens die Außenfläche (9) des Spitzerkörpers (2) zumindest teilweise mit chemischen Flüssigkeiten behandelt ist.

11. Spitzervorrichtung nach einem der vorhergehenden Ansprüche,
dadurch gekennzeichnet,
daß der Spitzerkörper (2) vor der Preßverformung der Getränkedose beigegebene Farbpigmente enthält.

12. Spitzervorrichtung nach einem der vorhergehenden Ansprüche,
dadurch gekennzeichnet,
daß die Spitzerklinge (6) auswechselbar an dem Spitzerkörper (2) angebracht ist.

13. Spitzervorrichtung nach Anspruch 12,
dadurch gekennzeichnet,
daß die Spitzerklinge (6) an den Spitzerkörper (2) anschraubbar oder in letzeren einschiebbar ist.

14. Spitzervorrichtung nach einem der Ansprüche 12 oder 13,
dadurch gekennzeichnet,
daß zumindest eine Ersatzspitzerklinge (12) lösbar an oder in dem Spitzerkörper (2) angebracht ist.

15. Spitzervorrichtung nach Anspruch 14,
dadurch gekennzeichnet,
daß für die mindestens eine Ersatzspitzerklinge (12) an der Außenfläche (9) des Spitzerkörpers (2) eine Aufnahmeausnehmung (13) vorgesehen ist.

16. Spitzervorrichtung nach einem der Ansprüche 1 bis 11
dadurch gekennzeichnet,
daß die Spitzerklinge (6) bei der Preßverformung der Getränkedose (8) in den Spitzerkörper (2) eingepreßt ist.

17. Spitzervorrichtung nach einem der Ansprüche 1 bis 11,
dadurch gekennzeichnet,
daß die Spitzerklinge (6) integral mit dem Spitzerkörper (2) aus der Getränkedose (8) gebildet ist.

18. Spitzervorrichtung nach einem der vorhergehenden Ansprüche,
dadurch gekennzeichnet,
daß eine Zentralöffnung (14) vorgesehen ist, die sich vom Bereich der Konusspitze des Aufnahmeraums (3, 3') vorzugsweise zumindest im wesentlichen längs der Achse des letzeren durch den Spitzerkörper (2) hindurch erstreckt.

19. Spitzervorrichtung nach einem der vorhergehenden Ansprüche,
dadurch gekennzeichnet,
daß der Aufnahmeraum (3, 3') eine durch eine Nachbehandlung wenigstens im wesentlichen unzerklüftete glatte Wandfläche aufweist und vorzugsweise durch eine Nachbehandlung eines preßgeformten Spitzerkörperrohlings gebildet wurde.

20. Spitzervorrichtung nach einem der Ansprüche 1 bis 18,
dadurch gekennzeichnet,
daß der Aufnahmeraum (3, 3') eine bei der Preßverformung der Getränkedose erzeugte Mantelfläche mit Falt- und/oder Preßhohlräumen (10) aufweist.

21. Spitzervorrichtung nach einem der vorhergehenden Ansprüche,
dadurch gekennzeichnet,
daß zumindest zwei unterschiedlich dimensionierte Aufnahmeräume (3, 3') für unterschiedlich dicke Spitzgegenstände vorgesehen sind.

22. Spitzervorrichtung nach einem der vorhergehenden Ansprüche,
dadurch gekennzeichnet,
daß die Spitzervorrichtung (1) einen Abfallbehälter (15) enthält, innerhalb dem der Spitzerkörper (2) mit von außen zugänglichem Aufnahmeraum (3) angeordnet ist.

23. Spitzervorrichtung nach Anspruch 22,
dadurch gekennzeichnet,
daß der Abfallbehälter (15) dosenförmig ist und insbesondere einen Schraub- oder Schnappdeckel (16) aufweist, und daß vorzugsweise der Spitzerkörper (2) an der Innenseite des Deckels (16) so angeordnet ist, daß die Einführöffnung (4) des Aufnahmeraumes (3) mit einer Durchstecköffnung (17) im Deckel (16) ausgerichtet ist.

24. Spitzervorrichtung nach einem der vorhergehenden Ansprüche,
dadurch gekennzeichnet,
daß der Spitzerkörper (2) auf seiner Außenfläche (9) zumindest einen Griffbereich (18) mit bei der Preßverformung erzeugter grober Struktur enthält.

25. Spitzervorrichtung nach Anspruch 24,
dadurch gekennzeichnet,
daß die Griffbereiche (18) bei der Preßverformung erzeugte Rillen (19) aufweisen.

26. Spitzervorrichtung nach einem der vorhergehenden Ansprüche,
dadurch gekennzeichnet,
daß der Spitzerkörper (2) eine quader- oder zylinderförmige oder pyramiden-, obelisk-, keil- oder kegelförmige oder -stumpfförmige Grundform hat.

27. Spitzervorrichtung nach einem der vorhergehenden Ansprüche,
dadurch gekennzeichnet,
daß der Aufnahmeraum (3, 3') beim Pressen des Spitzerkörpers (2) mit eingeformt ist.

28. Spitzervorrichtung nach einem der vorhergehenden Ansprüche,
dadurch gekennzeichnet,
daß für die Spitzerklinge (6) und/oder ggf. die Ersatzklinge (12) je ein Messerbett vorgesehen ist, das beim Pressen des Spitzerkörpers (2) mit eingeformt ist.

29. Spitzervorrichtung nach einem der vorhergehenden Ansprüche,
dadurch gekennzeichnet,
daß die physikalischen Größen des Spitzerkörpers (2) nach den Vorgaben einer Dose, insbesondere Getränkedose (8) festgelegt sind.

30. Spitzervorrichtung nach einem der Ansprüche 1 bis 28,
dadurch gekennzeichnet,
daß der Spitzerkörper (2) ein Teil eines Satzes von zwei oder mehreren beim Preßformen integral ausgebildeten Spitzerkörpern (2) ist und beim Preßformen oder anschließend abtrennbar ist, und
daß der Satz von Spitzerkörpern (2) vorzugsweise aus einer einzelnen Dose, insbesondere Getränkedose (8) besteht.

## Claims

1. A sharpener device for pencils, chalks and the like,
- with a sharpener body which has at least one receiving compartment that has a circular cross-section and extends with a conical taper from an insertion opening into the sharpener body, and comprises an output opening which extends for the removal of the sharpener waste from the receiving compartment through the sharpener body, and
- with a sharpener blade zonally overlapping the output opening, whose cutter edge extends parallel to a generator of the generated surface of the receiving compartment and intersects the generated surface along a generator in the output opening,
characterized in that
the sharpener body (2) consists of compacted metal cuttings or emptied compacted metal cans or parts thereof.

2. A sharpener device according to claim 1,
characterized in that
the sharpener body (2) consists of emptied compacted drink cans (8), in particular one drink can (8).

3. A sharpener device according to claim 2,
characterized in that
the sharpener body (2) consists of one emptied compacted 0.33-l-drink can (8).

4. A sharpener device according to one of the preceding claims,
characterized in that
the sharpener body (2) consists of a drink can (8) of light metal, in particular tin plate or aluminium plate.

5. A sharpener device according to one of the preceding claims,
characterized in that
the sharpener body (2) contains at least in parts of its outer surfaces (9,) fold cavities and/or press cavities (10).

6. A sharpener device according to one of the preceding claims,
characterized in that
the outer surfaces (9) of the sharpener body (2) are at least zonally mechanically refinished, in particular smooth-milled and/or smooth-polished.

7. A sharpener device according to one of the preceding claims,
characterized in that
at least the outer surface (9) of the sharpener body (2) has at least in part a coating (11).

8. A sharpener device according to one of the preceding claims,
characterized in that
at least the outer surface (9) of the sharpener body (2) is at least in part galvanized or lacquered.

9. A sharpener device according to one of the preceding claims,
characterized in that
the outer surface (9) of the sharpener body (2) is formed, at least in part, by the untreated metal cuttings or can.

10. A sharpener device according to one of the preceding claims,
characterized in that
at least the outer surface (9) of the sharpener body (2) is treated, at least in part, with chemical liquids.

11. A sharpener device according to one of the preceding claims,
characterized in that
the sharpener body (2) contains colour pigments added before the compression deformation of the drink can.

12. A sharpener device according to one of the preceding claims,
characterized in that
the sharpener blade (6) is exchangeably attached to the sharpener body (2).

13. A sharpener device according to claim 12,
characterized in that
the sharpener blade (6) can be screwed onto the sharpener body (2) or is insertable into the latter.

14. A sharpener device according to one of claims 12 or 13,
characterized in that
at least one replacement blade (12) can be detachably fitted on or in the sharpener body (2).

15. A sharpener device according to claim 14,
characterized in that
a receiving recess (13) is provided on the outer surface (9) of the sharpener body (2) for at least one replacement sharpener blade (12).

16. A sharpener device according to one of claims 1 to 11,
characterized in that
the sharpener blade (6) is pressed into the sharpener body (2) during the compression deformation of the drink can (8).

17. A sharpener device according to one of claims 1 to 11,
characterized in that
the sharpener blade (6) is formed out of the drink can (8) integrally with the sharpener body (2).

18. A sharpener device according to one of the preceding claims,
characterized in that
a central opening (14) is provided, which extends from the zone of the conical tip of the receiving compartment (3, 3'), preferably at least substantially along the axis of the latter, through the sharpener body (2).

19. A sharpener device according to one of the preceding claims,
characterized in that
the receiving compartment (3, 3') has a smooth wall surface at least substantially without cracks due to an aftertreatment, and was preferably formed by an aftertreatment of a compression-moulded blank of a sharpener body.

20. A sharpener device according to one of claims 1 to 18,
characterized in that
the receiving compartment (3, 3') has a generated surface with fold and/or press cavities (10) produced during the compression deformation of the drink can.

21. A sharpener device according to one of the preceding claims,
characterized in that
at least two differently dimensioned receiving compartments (3, 3') are provided for objects of different thicknesses to be sharpened.

22. A sharpener device according to one of the preceding claims,
characterized in that
the sharpener device (1) comprises a waste container (15), within which the sharpener body (2) is arranged, with a receiving compartment (3) accessible from the outside.

23. A sharpener device according to claim 22,
characterized in that
the waste container (15) is can-shaped, and has in particular, a screw-on or catch-engagement lid (16), and that the sharpener body (2) is preferably arranged on the inner side of the lid (16) in such a way that the insertion opening (4) of the receiving compartment (3) is aligned with a push-through opening (17) in the lid (16).

24. A sharpener device according to one of the preceding claims,
characterized in that
the sharpener body (2) contains on its outer surface at least one gripping zone (18) with a rough texture produced during the compression deformation.

25. A sharpener device according to claim 24,
characterized in that
the gripping zones (18) have serrations (19) produced during the compression deformation.

26. A sharpener device according to one of the preceding claims,
characterized in that
the sharpener body (2) has a parallelepiped or cylindrical or pyramid, obelisk, wedge-shaped or conical or frustoconical basic shape.

27. A sharpener device according to one of the preceding claims,
characterized in that
the receiving compartment (3, 3') is formed-in during the compaction of the sharpener body (2).

28. A sharpener device according to one of the preceding claims,
characterized in that
one cutter bed each is provided for the sharpener blade (6) and/or the replacement blade (12) if applicable, which is formed-in during the compaction of the sharpener body (2).

29. A sharpener device according to one of the preceding claims,
characterized in that
the physical sizes of the sharpener body (2) are determined according to the preset data of the can, in particular a drink can (8).

30. A sharpener device according to one of claims 1 to 28,
characterized in that
the sharpener body (2) is a part of a set of two or more sharpener bodies (2) formed integrally during the compression moulding and is separable during the compression moulding or subsequently thereto, and
that the set of sharpener bodies (2) consists preferably of a single can, in particular a drink can (8).

## Revendications

1. Outil d'appointage pour crayons, craies et analogues,
- comprenant un corps d'outil qui présente au moins une chambre réceptrice gui possède une section circulaire et s'enfonce dans le corps d'outil en se rétrécissant en cône, en partant d'une ouverture d'introduction, et qui présente une ouverture d'éjection qui s'étend au travers du corps de l'outil en partant de la chambre réceptrice pour évacuer les déchets de taillage, et
- une lame de taillage qui recouvre l'ouverture d'éjection, dont l'arête tranchante s'étend parallèlement à une génératrice de la surface latérale de la chambre réceptrice, et coupe la surface latérale le long d'une génératrice à l'intérieur de l'ouverture d'éjection,
caractérisé
en ce que le corps (2) de l'outil est composé de copeaux métalliques comprimés ou de boîtes métalliques ou parties de boîtes métalliques comprimées.

2. Outil d'appointage selon la revendication 1,
caractérisé
en ce que le corps (2) de l'outil est composé de boîtes de boisson (8) vidées, comprimées, en particulier d'une seule boîte de boisson (8).

3. Outil d'appointage selon la revendication 2,
caractérisé
en ce que le corps (2) de l'outil est composé d'une boîte de boisson (8) de 0,33 l, vidée, comprimée.

4. Outil d'appointage selon une des revendications précédentes,
caractérisé
en ce que le corps (2) de l'outil est constitué par une boîte de boisson (8) en métal léger, en particulier en fer blanc ou en tôle d'aluminium.

5. Outil d'appointage selon une des revendications précédentes,
caractérisé
en ce que le corps (2) de l'outil présente des plis et/ou cavités de compression (10), du moins dans certaines parties de ses surfaces extérieures (9).

6. Outil d'appointage selon une des revendications précédentes,
caractérisé
en ce que les surfaces extérieures (9) du corps (2) de l'outil sont traitées par un usinage de reprise mécanique, en particulier dressées à la fraise et/ou polies, du moins par endroits.

7. Outil d'appointage selon une des revendications précédentes,
caractérisé
en ce qu'au moins la surface extérieure (9) du corps (2) de l'outil présente au moins partiellement un revêtement (11).

8. Outil d'appointage selon une des revendications précédentes,
caractérisé
en ce qu'au moins la surface extérieure (9) du corps (2) de l'outil est au moins partiellement galvanisée ou laquée.

9. Outil d'appointage selon une des revendications précédentes,
caractérisé
en ce que la surface extérieure (9) du corps (2) de l'outil est formée, au moins partiellement, par les copeaux métalliques non traités ou par la boîte non traitée.

10. Outil d'appointage selon une des revendications précédentes,
caractérisé
en ce qu'au moins la surface extérieure (9) du corps (2) de l'outil est traitée au moins partiellement à l'aide de liquides chimiques.

11. Outil d'appointage selon une des revendications précédentes,
caractérisé
en ce que le corps (2) de l'outil contient des pigments colorés ajoutés avant la déformation de la boîte de boisson par compression.

12. Outil d'appointage selon une des revendications précédentes,
caractérisé
en ce que la lame (6) de l'outil est fixée au corps (2) de l'outil de façon interchangeable.

13. Outil d'appointage selon la revendication 12,
caractérisé
en ce que la lame (6) de l'outil peut être vissée sur le corps (2) de l'outil ou emmanchée dans ce dernier.

14. Outil d'appointage selon une des revendications 12 et 13,
caractérisé
en ce qu'au moins une lame de rechange (12) de l'outil est fixée de façon amovible sur ou dans le corps (2) de l'outil.

15. Outil d'appointage selon la revendication 14,
caractérisé
en ce qu'il est prévu sur la surface extérieure (9) du corps (2) de l'outil un évidement de logement (13) pour au moins une lame de rechange (12) de l'outil.

16. Outil d'appointage selon une des revendications 1 à 11,
caractérisé
en ce que la lame (6) de l'outil est incorporée par compression dans le corps (2) de l'outil lors de la déformation par compression de la boîte de boisson (8).

17. Outil d'appointage selon une des revendications 1 à 11,
caractérisé
en ce que la lame (6) de l'outil est intégrée au corps (2) de l'outil, étant prise sur la matière de la boîte de boisson (8).

18. Outil d'appointage selon une des revendications précédentes,
caractérisé
en ce qu'il est prévu une ouverture centrale (14) qui s'étend au travers du corps (2) de l'outil, en partant de la région de la pointe du cône de la chambre réceptrice (3, 3'), de préférence au moins sensiblement le long de l'axe de cette chambre.

19. Outil d'appointage selon une des revendications précédentes,
caractérisé
en ce que la chambre réceptrice (3, 3') présente une surface de paroi lisse, au moins sensiblement non fissurée, obtenue par une opération de reprise, et a été formée de préférence par une opération de reprise d'une ébauche de corps d'outil formée par compression.

20. Outil d'appointage selon une des revendications 1 à 18,
caractérisé
en ce que la chambre réceptrice (3, 3') présente une surface latérale produite lors de la déformation de la boîte de boisson par compression qui présente elle-même des cavités de plis et/ou de compression (10).

21. Outil d'appointage selon une des revendications précédentes,
caractérisé
en ce qu'il est prévu au moins deux chambres réceptrices (3, 3') de dimensions différentes, pour recevoir des objets à appointer de différentes grosseurs.

22. Outil d'appointage selon une des revendications précédentes,
caractérisé
en ce que l'outil d'appointage (1) comprend un réceptacle à déchets (15) à l'intérieur duquel le corps (2) de l'outil est disposé de façon que la chambre réceptrice (3) soit accessible de l'extérieur.

23. Outil d'appointage selon la revendication 22,
caractérisé
en ce que le réceptacle à déchets (15) est en forme de boîte et présente en particulier un couvercle vissé ou encliqueté (16) et en ce que le corps (2) de l'outil est agencé sur le côté intérieur du couvercle (16) de manière que l'ouverture d'introduction (4) de la chambre réceptrice (3) soit alignée sur une ouverture de traversée (17) ménagée dans le couvercle (16).

24. Outil d'appointage selon une des revendications précédentes,
caractérisé
en ce que le corps (2) de l'outil présente, sur sa surface extérieure (9) au moins une région de prise (18) ayant une structure grossière produite lors de la déformation par compression.

25. Outil d'appointage selon la revendication 24,
caractérisé
en ce que les régions de prise (18) présentent des rainures (19) produites lors de la déformation par compression.

26. Outil d'appointage selon une des revendications précédentes,
caractérisé
en ce que le corps (2) de l'outil a une forme de base parallélépipédique ou cylindrique ou encore pyramidale, en obélisque, en coin ou conique, ou tronquée.

27. Outil d'appointage selon une des revendications précédentes,
caractérisé
en ce que la chambre réceptrice (3, 3') est façonnée lors de la compression du corps (2) de l'outil.

28. Outil d'appointe selon une des revendications précédentes,
caractérisé
en ce qu'il est prévu, pour la lame (6) de l'outil et/ou éventuellement pour la lame de rechange (12), un appui de lame, qui est formé lors de la compression du corps (2) de l'outil.

29. Outil d'appointage selon une des revendications précédentes,
caractérisé
en ce que les dimensions physiques du corps (2) de l'outil sont déterminées en fonction des paramètres prédéterminés d'une boîte, en particulier d'une boîte de boisson (8).

30. Outil d'appointage selon une des revendications 1 à 28,
caractérisé
en ce que le corps (2) de l'outil est une partie d'un jeu de deux ou plus de deux corps (2) d'outils formés en une seule pièce lors de la déformation par compression, et peut être séparé lors de la déformation par compression ou ultérieurement et
en ce que le jeu de corps d'outils (2) est de préférence réalisé à partir d'une seule boîte, en particulier d'une boîte de boisson (8).
